# NEUE EUROPÄISCHE PATENTSCHRIFT

(11) **EP 1 576 391 B2**
(45) Veröffentlichungstag und Bekanntmachung des Hinweises auf die Entscheidung über den Einspruch: **16.11.2011**
(45) Hinweis auf die Patenterteilung: 26.03.2008
(21) Anmeldenummer: 03769214.2
(22) Anmeldetag: 25.09.2003
(51) Int. Cl.: G01S 13/93, B60R 21/01

(54) **VERFAHREN UND EINRICHTUNG ZUR OBJEKTDETEKTIERUNG**
METHOD AND DEVICE FOR OBJECT DETECTION
PROCEDE ET DISPOSITIF POUR LA DETECTION D'OBJETS

(30) Priorität: 13.12.2002 DE 10258287
(43) Veröffentlichungstag der Anmeldung: 21.09.2005
(73) Patentinhaber: ROBERT BOSCH GMBH, 70442 Stuttgart (DE)
(72) Erfinder: ZIMMERMANN, Uwe, 71636 Ludwigsburg (DE); PRUKSCH, Achim, 74861 Neudenau (DE)
(86) Internationale Anmeldenummer: PCT/DE2003/003205
(87) Internationale Veröffentlichungsnummer: WO 2004/055547

(56) Entgegenhaltungen:
- EP-A- 0 811 855
- DE-A- 19 858 129
- DE-A- 19 949 409
- DE-A1- 0 760 485
- DE-A1- 4 420 422
- DE-A1- 10 011 263
- DE-A1- 19 622 777
- JP-A- 05 108 149
- US-A- 5 892 855
- KUNERT M: "Radarbasierte Nahfeldsensorik zur Precrash Sensierung" INNOVATIVER KFZ-INSASSEN- UND PARTNERSCHUTZ. TAGUNG BERLIN, SEPT. 30 - OKT. 1, 1999, VDI BERICHTE 1471, DUESSELDORF: VDI VERLAG GMBH, DE, Bd. 471, 30. September 1999 (1999-09-30), Seiten 169-185, XP002203526 ISBN: 3-18-091471-8

## Beschreibung

### Stand der Technik

Aus DE 199 49 409 A1 der Anmelderin ist ein Verfahren zur Objektdetektierung mit wenigstens zwei an einem Kraftfahrzeug angebrachten, abstandsauflösenden Sensoren bekannt, deren Detektionsbereiche sich wenigstens teilweise überlappen, wobei relative Positionen möglicher detektierter Objekte bezüglich der Sensoren im Überlappungsbereich nach dem Triangulationprinzip bestimmt werden. Dabei werden mögliche Scheinobjekte, die durch die Objektbestimmung entstehen, durch dynamische Objektbeobachtungen ermittelt.

Derartige bekannte Verfahren zur Positionsbestimmung von Objekten benutzen als Eingangsgrößen die Abstandslisten von gleichartigen Einzelsensoren. Gleichartig bedeutet in diesem Zusammenhang, dass diese Einzelsensoren den gleichen Öffnungswinkel aufweisen. Der maximale horizontale Erfassungsbereich serienüblicher Sensoren beträgt zum Beispiel +/- 55 Grad. Bei einer Entfernung von etwa 14m deckt somit jeder Sensor in lateraler Richtung einen Bereich von ca. +/- 6m ab. Das bedeutet, dass neben relevanten Objekten, wie Verkehrsteilnehmern, auch sehr viele störende Objekte am Fahrbahnrand, wie beispielsweise Bäume, Büsche oder Pfosten, erfasst werden. Zudem wurde anhand zahlreicher Messdaten festgestellt, dass auch bei relevanten Objekten mehrere Reflexionszentren detektiert werden können und keineswegs sichergestellt ist, dass jeder der Sensoren das gleiche Reflexionszentrum detektiert. Aufgrund dieses Sachverhalts ist, auch bei Verwendung von mehr als zwei Sensoren, nicht bei allen Verkehrssituationen sichergestellt, dass relevante und störende Objekte eindeutig identifiziert werden können. Auch ist es nicht auszuschließen, dass Objekte an falschen Positionen angezeigt werden.

Die EP-A-0811855 zeigt ein Sensorsystem zur Positionskontrolle. Dabei werden zwei Sensoren gezeigt, deren Erfassungsbereich sich im Wesentlichen deckt. Bei einem Sensor handelt es sich um einen optischen Sende- und Empfangssensor. Die Auswertung der aufgenommenen Messsignale erfolgt derart, dass zum einen der Abstand des Objekts vom Fahrzeug durch die Messsignale eines Sensors, die azimutale Position des Objekts in Bezug auf das Fahrzeug vom zweiten Sensor bestimmt wird. Beide Sensorsysteme dienen daher zur Ermittlung unterschiedlicher Größen. In einer weiteren Ausführungsform werden neben dem Abstandssensor Triangulationssensoren mit Sendestrahlen und Empfangsstrahlen dargestellt. Das dort beschriebene Sensorsystem besteht aus zwei Sensoren, mit deren Hilfe offensichtlich einmal der Abstand des Objekts, zum anderen dessen Winkellage bestimmt wird.

Die DE-A-19858129 zeigt eine Einrichtung, in welchem an einem Fahrzeug zwei Nahbereichssensoren und ein Fernbereichsensor verwendet werden. Die Erfassungsbereiche der Nahbereichsensoren überlappen sich nicht. Es wird davon ausgegangen, dass ein Hindernis entweder von den Nachbereichsensoren oder von den Fernbereichsensoren erkannt wird. Wird ausnahmsweise das Hindernis in einem Scangebiet detektiert, das sowohl die Nah- als auch die Fernbereichhindernissensoren abtasten, dann werden die Daten beider Sensorarten zur weiteren Auswertung gewichtet.

Aus der DE 100 11 263 A1 ist ein Objektdetektionssystem nach dem Oberbegriff der Ansprüche 1 und 2, insbesondere für ein Kraftfahrzeug bekannt, bei dem das Objektdetektionssystem mehrere Objektdetektoren und/oder Betriebsmodi aufweist, mit denen unterschiedliche Detektionsreichweiten und/oder Detektionsbereiche erfasst werden. Hierbei ist bevorzugt ein Objektdetektor ein Radarsensor, der in einem ersten Betriebsmodus eine relativ große Detektionsreichweite bei einem relativ kleinen Winkelerfassungsbereich und in einem zweiten Betriebsmodus eine relativ dazu geringe Detektionsreichweite bei einem vergrößerten Winkelerfassungsbereich aufweist.

In der EP 0 760 485 A1 ist ein Verfahren zur Hinderniserkennung für eine Abstands-und/oder Geschwindigkeitsregelung eines Kraftfahrzeuges beschrieben, bei dem mit Hilfe einer Detektionseinrichtung der Abstand und/oder die Geschwindigkeit eines vor dem Kraftfahrzeug befindlichen Hindernisses erkannt wird. Erfindungsgemäß wird auf Basis von Straßenkarteninformationen einer im Kraftfahrzeug vorhandenen Navigationseinrichtung eine Bewertung des von der Detektionseinrichtung erfaßten Hindernisses und/oder eine Einstellung der Detektionseinrichtung vorgenommen. Mit Hilfe des erfindungsgemäßen Verfahrens werden auch bei einer Kurvenfahrt nur solche momentan vor dem Kraftfahrzeug befindlichen Objekte als Hindernis erkannt, welche sich tatsächlich vor dem Fahrzeug auf der Fahrbahn befinden.

Aus der US 5,892,855 ist eine Objektdetektionseinrichtung auf Basis von 3 Videokameras bekannt, die unterschiedlich weite Erfassungsbereiche und ungekehrt proportional dazu unterschiedlich breite Erfassungsbereiche aufweisen. Bei Kurvenfahrten werden die Kameras unterschiedlich stark verschwenkt, wobei die am weitesten erfassende Kamera am stärksten verschenkt wird, so dass jede Kamera unterschiedlich weit entfernte Bereiche auf dem eigenen vorausliegenden Fahrstreifen erfassen.

Aus der DE 44 20 422 A1 ist ein technisches Komplexauge für dynamisches maschinelles Sehen bekannt. Auf einer um 2 Achsen drehbaren und steuerbaren Plattform sind 2 Weitwinkel-Videokameras und eine Tele-Videokamera so angeordnet, daß die optischen Achsen der Weitwinkel-Videokameras in Richtung der Sichtachse des Komplexauges divergieren und sich ihre Sichtbereiche vor der Plattform überlappen, wobei die Telekamera auf den Überlappungsbereich der Weitwinkelkamera ausgerichtet ist.

Aus dem Abstrakt zur JP 05108149 A ist eine Kameraanordnung, bestehend aus einer Dachkamera und zwei Säulenkameras bekannt, die gemeinsam ein dreidimensionales Bild der Fahrzeugumgebung erzeugen.

### Vorteile der Erfindung

Die vorliegende Erfindung befasst sich mit einer weiteren Verbesserung des bekannten und bewährten Verfahrens, die in der Lage ist, die Zuverlässigkeit noch weiter zu erhöhen. Durch die verbesserte Unterscheidungsmöglichkeit zwischen relevanten Objekten einerseits und störenden Objekten andererseits, ist eine noch genauere Positionsbestimmung relevanter Objekte möglich. Durch die Konzentration mindestens eines Sensors auf den eigenen Fahrbahnbereich lässt sich zudem, bei Beibehaltung der gleichen Strahlungsleistung, die Reichweite vergrößern.

### Zeichnung

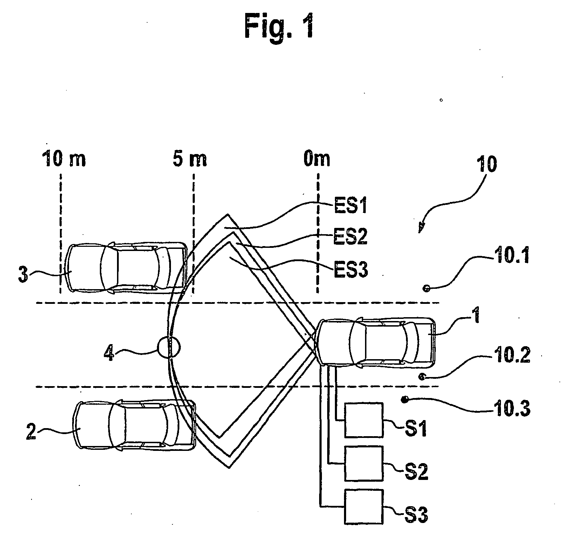

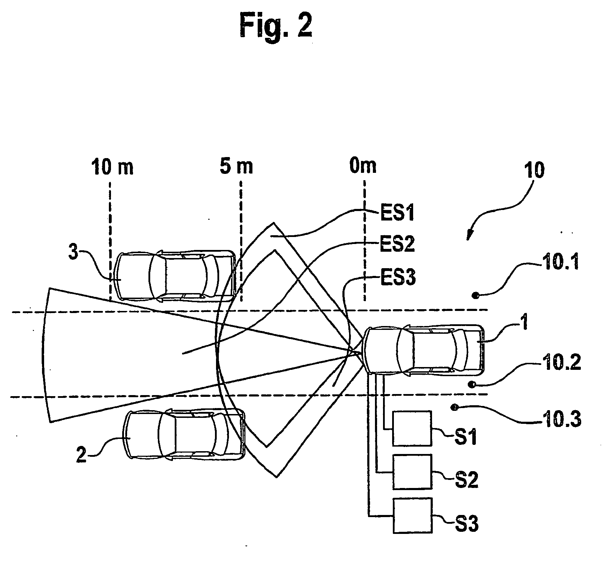

Das erfindungsgemäße Verfahren und die erfindungsgemässe Einrichtung werden nun anhand der Ausführungsbeispiele in der Zeichnung erläutert. Es zeigen Fig.1 eine Verkehrssituation auf einer mehrere Fahrspuren aufweisenden Fahrbahn mit Anwendung des herkömmlichen Verfahrens, Fig.2 eine Verkehrssituation auf einer mehrere Fahrspuren umfassenden Fahrbahn mit Anwendung des erfindungsgemäßen Verfahrens.

### Beschreibung der Ausführungsbeispiele

Anhand von Figur 1 wird kurz das an sich bekannte Verfahren mit seinen, bei sehr ungünstigen Bedingungen noch vorhandenen Unzulänglichkeiten erläutert. Dargestellt ist eine Verkehrssituation auf einer mehrere Fahrspuren 10.1, 10.2, 10.3 umfassenden Fahrbahn 10. Das eigene Fahrzeug 1 bewegt sich auf der mittleren Fahrspur 10.2 und nähert sich zwei fremden Fahrzeugen 2 und 3, die sich in gleicher Richtung auf den benachbarten Fahrspuren 10.1 und 10.3 fortbewegen. Das Fahrzeug 1 ist mit Abstandssensoren S1, S2, S3 ausgestattet, deren sich wenigstens teilweise überlappende Erfassungsbereiche mit ES1, ES2, ES3 bezeichnet sind. Durch die Detektion unterschiedlicher Reflexionszentren kann es unter besonders ungünstigen Bedingungen vorkommen, dass das Gesamtsystem, abgesehen von den Fahrzeugen 2 und 3, auch ein gar nicht vorhandenes Scheinziel anzeigt. Ein derartiges Scheinziel befindet sich scheinbar im Bereich 4, also auf der Fahrspur 10.2 des eigenen Fahrzeugs 1. In dem Bereich 4 schneiden sich die Randbereiche der Erfassungsbereiche ES1, ES2, ES3. Ersichtlich führt ein derartiges Ergebnis zu einer Fehlreaktion des Systems, das heißt, das Fahrzeug würde mit einem Bremseingriff reagieren. Damit einher ginge eine starke Verunsicherung des Fahrers des Fahrzeugs 1, da er, auf die Anzeige des Systems vertrauend, fälschlicherweise annimmt, dass sich vor dem eigenen Fahrzeug 1, auf der eigenen Fahrspur 10.2 der Fahrbahn 10, in dem Bereich 4, ein Hindernis befindet. Sobald der Fahrer feststellt, dass es sich um eine Fehlanzeige des Systems handelt, läuft er Gefahr, das Vertrauen in die Zuverlässigkeit des Systems zu verlieren.

Das erfindungsgemäße Verfahren wird anhand von Figur 2 erläutert. Dargestellt ist eine vergleichbare .Verkehrssituation wie in Figur 1. Auf einer mehrere Fahrspuren 10.1, 10.2, 10.3 umfassenden Fahrbahn 10 bewegt sich wiederum das eigene Fahrzeug 1 auf der mittleren Fahrspur 10.2 und nähert sich zwei fremden Fahrzeugen 2 und 3, die sich in gleicher Richtung auf den benachbarten Fahrspuren 10.1 und 10.3 fortbewegen. Das Fahrzeug 1 ist mit Abstandssensoren S1, S2, S3 ausgestattet, deren sich wenigstens teilweise überlappende Erfassungsbereiche mit ES1, ES2, ES3 bezeichnet sind. Wenigstens zwei Sensoren, nämlich die Sensoren S1, S3, sind an der Fahrzeugfront im Wesentlichen in einer Ebene liegend angeordnet. Ein dritter Sensor S2 ist ebenfalls an der Fahrzeugfront, zwischen den Sensoren S1 und S3 angeordnet. Die Erfassungsbereiche ES1 und ES3 der Sensoren S1 und S3 überdecken sich weitgehend. Ihre Winkelausdehnung in einer horizontalen Ebene liegt beispielsweise bei etwa +/-55°. Dies bedeutet, dass in einer Entfernung von etwa 14 m von der Fahrzeugfront des Fahrzeugs 1 jeder der Sensoren S1, S3 mit seinem Erfassungsbereich ES1, ES3 in lateraler Richtung einen Bereich von etwa +/- 6m abdeckt. Bei der in Figur 2 dargestellten mehrspurigen Fahrbahn 10 werden also, abgesehen von der eigenen Fahrspur 10.2, wenigstens noch Teilbereiche der benachbarten Fahrspuren 10.1 und 10.3 abgedeckt. Bei einer Straße mit einer schmaleren Fahrbahn, die beispielsweise über nur je eine Fahrspur für jede Richtung verfügt, würden die Erfassungsbereiche ES1, ES3 der Sensoren S1,S3 neben der benachbarten Fahrspur auch die Ränder der Straße und dort vorhandene Hindernisse erfassen. Erfindungsgemäß weist nun mindestens ein Sensor S2 einen Erfassungsbereich ES2 auf, dessen Winkelausdehnung wesentlich geringer ist als jene der Erfassungsbereiche ES1 und ES3. Vorzugsweise ist die Winkelausdehnung des Erfassungsbereichs ES2 so gering, dass, wie in Figur 2 dargestellt, bei der maximalen Erfassungsreichweite im Wesentlichen nur die eigene Fahrspur 10.2 abgedeckt wird. Durch eine derartige Beschränkung des horizontalen Erfassungsbereichs des Sensors S2 kann eine Auswahl von relevanten Objektreflexen unter der Annahme getroffen werden, dass Objekte außerhalb der eigenen Fahrspur 10.2, also beispielsweise, die Fahrzeuge 2 und 3 auf den Fahrspuren 10.1 und 10.3, von dem Sensor S2 nicht mehr detektiert werden. Ein Objekt wird nämlich generiert beziehungsweise trianguliert, wenn es von mindestens zwei Sensoren detektiert wird. Wenn der Schnittpunkt der Erfassungsbereiche der Sensoren S1 und S3 in dem Erfassungsbereich ES2 des Sensors S2 liegt, der Sensor S2 jedoch kein Objekt detektiert, dann wird kein Objekt in dem Erfassungsbereich ES2 generiert. Denn daraus ergibt sich, dass die von den Sensoren S1 und S3 detektierten Abstandswerte nicht vom gleichen Objekt stammen können. Als relevante Ziele werden demzufolge nur noch jene Objekte angesehen, die sowohl von den Sensoren S1, S3 als auch von dem Sensor S2 detektiert werden. Hierbei handelt es sich praktisch ausschließlich nur um Objekte, die sich auf der eigenen Fahrspur 10.2 befinden. Bei der in Figur 2 dargestellten Verkehrssituation würde demzufolge kein als relevant einzustufendes Objekt angezeigt werden. Auch die Darstellung eines Scheinziels kann, selbst unter sehr ungünstigen Bedingungen, wirkungsvoll unterdrückt werden.

Infolge der möglichen Fokussierung der Strahlung des Sensors 2, kann dessen Erfassungsbereich ES2, wie in Figur 2 dargestellt, sich in Fahrtrichtung des Fahrzeugs 2 wesentlich weiter erstrecken als die Erfassungsbereiche ES1 und ES3 der Sensoren S1, S3. Dies ist möglich, ohne die Strahlungsleistung zu erhöhen. Die Fokussierung kann auf relativ einfache Weise durch entsprechend dimensionierte optische Elemente, wie zum Beispiel Linsen, erfolgen, die im Strahlengang angeordnet werden. Da infolge des größeren Erfassungsbereichs ES2 des Sensors S2 in Fahrtrichtung des Fahrzeugs 2 auf der eigenen Fahrspur 10.2 befindliche Objekte frühzeitig selektiv erfasst werden können, kann in vorteilhafter Weise eine Präkonditionierung eines in dem System vorgesehenen Triangulations- und/oder Trackingalgorithmus, oder eines Filterverfahrens erfolgen. Hierdurch ergibt sich ein Zeitgewinn, der insbesondere bei kritischen Situationen zu einer Vergrößerung der Sicherheit beiträgt.

In einer vorteilhaften weiteren Ausgestaltung der Erfindung können die Erfassungsbereiche ES1 und ES3 der für die peripheren Bereiche zuständigen Sensoren S1, S3 weiter derart angepasst werden, dass möglichst wenig nichtrelevante Objekte detektiert werden. So lässt sich vorzugsweise die Erfassungsreichweite der Erfassungsbereiche ES1 und ES3 derart verkürzen, dass zwar verfrüht auf die eigene Fahrspur 10.2 einscherende Fremdfahrzeuge noch sicher erkannt, entferntere Objekte am Straßenrand aber dagegen nicht mehr detektiert werden. Der Erfassungsbereich in unmittelbarer Nähe des Fahrzeugs 2 wird durch die beschriebenen Maßnahmen nicht wesentlich beeinträchtigt, so dass auch Einparkvorgänge weiterhin zuverlässig unterstützt werden.

Die erfindungsgemäße Lösung lässt sich im Wesentlichen kostenneutral umsetzen, da bereits serienmäßig vorhandene Sensoren nur entsprechend angepasst werden müssen. Gegebenenfalls kann für den Sensor S2 auch ein in einem anderen Frequenzbereich, wie beispielsweise im 77 GHz-Band arbeitender Sensor eingesetzt werden, der sich in einem ACC-System (ACC = Automatic Cruise Control-System) schon bewährt hat.

In einer vorteilhaften weiteren Ausgestaltung der Erfindung sind Erfassungswinkel und/oder Erfassungsreichweite des Erfassungsbereichs ES2 des Sensors 2 derart an die jeweiligen Straßenverhältnisse anpassbar, dass sich jeweils eine optimale Anpassung an den Typ der Straße und die davon abhängige Breite der vorhandenen Fahrspuren ergibt. So kann der Erfassungsbereich ES2 optimal an Fahrbahnen angepasst werden, die nur über eine einzige Fahrspur oder über eine Mehrzahl von Fahrspuren verfügen. Durch Kopplung mit einem in dem Fahrzeug 1 vorgesehenen Navigationssystem, oder durch ein GPS-System, kann auch eine automatische Anpassung des Erfassungsbereichs ES2 an die Straßenkategorie erfolgen. Sobald das Navigationssystem feststellt, dass ein bestimmter Straßentyp befahren wird, wird dem System zur Positionsbestimmung von Objekten ein entsprechendes Anpassungssignal zugeleitet.

In einer weiteren vorteilhaften Ausgestaltung der Erfindung erfolgt eine derartige Anpassung des Erfassungsbereichs ES2 durch das System zur Positionsbestimmung von Objekten selbst, indem insbesondere die Signale der für die peripheren Bereiche zuständigen Sensoren S1 und S3 entsprechend ausgewertet werden. Fassen diese Sensoren beispielsweise sehr viele Objekte in ihrem Erfassungsbereich auf, kann daraus abgeleitet werden, dass der jeweilige Erfassungsbereich zu weit über den Randbereich der Straße ausgedehnt ist. Die Breite des Erfassungsbereichs könnte dann automatisch verringert werden.

### Bezugszeichenliste

- 1: Erstes Fahrzeug
- 2: Zweites Fahrzeug
- 3: Drittes Fahrzeug
- 4: Scheinobjekt
- 10: Fahrbahn
- 10.1: erste Fahrspur
- 10.2: zweite Fahrspur
- 10.3: dritte Fahrspur
- S1: erster Sensor
- S2: zweiter Sensor
- S3: dritter Sensor
- ES1: Erfassungsbereich Sensor1
- ES2: Erfassungsbereich Sensor 2
- ES3: Erfassungsbereich Sensor 3
- EW: Erfassungswinkel

## Patentansprüche

1. Verfahren zur Objektdetektierung mit fahrzeuggebundenen Sensoren (S1, S2, S3), deren Erfassungsbereiche sich wenigstens teilweise überlappen, wobei Signale von wenigstens zwei ersten Sensoren (S1, S3) an der Fahrzeugfront mit im Wesentlichen deckungsgleichen ersten Erfassungsbereichen (ES1, ES3) und zusätzlich Signale mindestens eines weiteren Sensors (S2), der einen geringeren Erfassungswinkel (EW) aufweist als die wenigstens zwei ersten Sensoren (S1, S3) und dessen Erfassungsbereich (ES2) sich nur teilweise mit den ersten Erfassungsbereichen (ES1, ES3) überlappt, ausgewertet werden wobei ein Objekt dann erkannt wird, wenn es von mindestens zwei Sensoren S1, S2, S3) detektiert wird, und als relevant angesehen wird, wenn es sowohl von den ersten zwei Sensoren (S1, S3) als auch von dem weiteren Sensor (S2) detektiert wird, wobei der Erfassungswinkel (EW) des mindestens einen weiteren Sensors (S2) veränderbar ist, **dadurch gekennzeichnet, dass** der Erfassungswinkel (EW) derart an die jeweiligen Straßenverhältnisse angepasst wird, dass sich jeweils eine optimale Anpassung an den Typ der Straße und die davon abhängigen Breite der vorhandenen Fahrspuren (10.1, 10.2, 10.3) ergibt.

2. Einrichtung zur Objektdetektierung mit wenigstens drei fahrzeuggebundenen Sensoren deren Erfassungsbereiche sich wenigstens teilweise überlappen, wobei wenigstens zwei erste Sensoren (S1, S3) an der Fahrzeugfront angeordnet sind, wobei sich die Erfassungsbereiche (ES1, ES3) der wenigstens zwei ersten Sensoren (S1, S3) weitgehend überdecken und wobei wenigstens ein weiterer Sensor (S2) vorgesehen ist, der einen geringeren Erfassungswinkel (EW) aufweist als die wenigstens zwei ersten Sensoren (S1, S3) und dessen Erfassungsbereich (ES2) sich nur teilweise mit den ersten Erfassungsbereichen (ES1, ES3) überlappt, wobei die Einrichtung derart ausgestaltet ist, dass ein Objekt dann erkannt wird, wenn es von mindestens zwei Sensoren (S1, S2, S3) detektiert wird, und als relevant angesehen wird, wenn es sowohl von den ersten zwei Sensoren (S1, S3) als auch von dem weiteren Sensor (S2) detektiert wird, wobei der Erfassungswinkel (EW) des mindestens einen weiteren Sensors (S2) veränderbar ist **dadurch gekennzeichnet, dass** der Erfassungswinkel (EW) derart an die jeweiligen Straßenverhältnisse angepasst wird, dass sich jeweils eine optimale Anpassung an den Typ der Straße und die davon abhängige Breite der vorhandenen Fahrspuren (10.1, 10.2, 10.3) ergibt.

3. Einrichtung nach Anspruch 2 **dadurch gekennzeichnet, dass** der Erfassungswinkel (EW) der wenigstens zwei ersten Sensoren (S1, S3) zwischen +/-50° und +/-60°, insbesondere +/-55° beträgt.

4. Einrichtung nach einem der Ansprüche 2 bis 3, **dadurch gekennzeichnet, dass** die Anpassung des Erfassungswinkels (EW) durch ein Steuersignal eines Navigationssystems erfolgt.

5. Einrichtung nach einem der Ansprüche 2 bis 4, **dadurch gekennzeichnet, dass** die Anpassung des Erfassungswinkels (EW) durch ein von den Ausgangssignalen der Sensoren (S1, S2, S3) abgeleitetes Steuersignal erfolgt.

## Claims

1. Method for detecting objects with vehicle-mounted sensors (S1, S2, S3) whose sensing ranges overlap at least partially, wherein signals from at least two first sensors (S1, S3) on the front of the vehicle with essentially congruent first sensing ranges (ES1, ES3) and additionally signals of at least one further sensor (S2) which has a smaller sensing angle (EW) than the at least two first sensors (S1, S3) and whose sensing range (ES2) overlaps only partially with the first sensing ranges (ES1, ES3) are evaluated, wherein an object is recognised if it is detected by at least two sensors (S1, S2, S3), and is regarded as being relevant if it is detected both by the first two sensors (S1, S3) and by the further sensor (S2), wherein the sensing angle (EW) of the at least one further sensor (S2) can be changed, **characterized in that** the sensing angle (EW) is adapted to the respective road conditions in such a way that in each case optimum adaptation to the type of road and the dependent width of the lanes (10.1, 10.2, 10.3) which are present occurs.

2. Device for detecting objects having at least three vehicle-mounted sensors whose sensing ranges overlap at least partially, wherein at least two first sensors (S1, S3) are arranged on the front of the vehicle, wherein the sensing ranges (ES1, ES3) of the at least two first sensors (S1, S3) substantially overlap and wherein at least one further sensor (S2) is provided which has a smaller sensing angle (EW) than the at least two first sensors (S1, S3) and whose sensing range (ES2) overlaps only partially with the first sensing ranges (ES1, ES3), wherein the device is embodied in such a way that an object is recognised if it is detected by at least two sensors (S1, S2, S3), and is regarded as being relevant if it is detected both by the first two sensors (S1, S3) and by the further sensor (S2), wherein the sensing angle (EW) of the at least one further sensor (S2) can be changed, **characterized in that** the sensing angle (EW) is adapted to the respective road conditions in such a way that in each case optimum adaptation to the type of road and the dependent width of the lanes (10.1, 10.2, 10.3) which are present occurs.

3. Device according to Claim 2, **characterized in that** the sensing angle (EW) of the at least two first sensors (S1, S3) is between +/-50° and +/-60°, and is in particular +/-55°.

4. Device according to one of Claims 2 to 3, **characterized in that** the sensing angle (EW) is adapted by means of a control signal of a navigation system.

5. Device according to one of Claims 2 to 4, **characterized in that** the sensing angle (EW) is adapted by means of a control signal which is derived from the output signals of the sensors (S1, S2, S3).

## Revendications

1. Procédé de détection d'objet avec des capteurs (S1, S2, S3) reliés à un véhicule dont les zones de détection se chevauchent au moins partiellement, des signaux d'au moins deux premiers capteurs (S1, S3) à l'avant du véhicule avec des premières zones de détection (ES1, ES3) pour l'essentiel coïncidentes et des signaux supplémentaires d'au moins un autre capteur (S2), lequel présente un angle de détection (EW) plus petit que les au moins deux premiers capteurs (S1, S3) et dont la zone de détection (ES2) ne chevauche que partiellement les premières zones de détection (ES1, ES3), étant interprétés, un objet étant alors détecté lorsqu'il est détecté par au moins deux capteurs (S1, S2, S3) et étant considéré comme pertinent lorsqu'il est détecté à la fois par les deux premiers capteurs (S1, S3) et par l'autre capteur (S2), l'angle de détection (EW) de l'au moins un autre capteur (S2) pouvant être modifié, **caractérisé en ce que** l'angle de détection (EW) est adapté aux conditions respectives de la route de manière à obtenir à chaque fois une adaptation optimale au type de route et à la largeur qui en dépend des voies de circulation (10.1, 10.2, 10.3).

2. Dispositif de détection d'objet comprenant au moins trois capteurs reliés à un véhicule dont les zones de détection se chevauchent au moins partiellement, au moins deux premiers capteurs (S1, S3) étant disposés à l'avant du véhicule, les zones de détection (ES1, ES3) des au moins deux premiers capteurs (S1, S3) étant pour l'essentiel coïncidentes et au moins un autre capteur (S2) étant prévu, lequel présente un angle de détection (EW) plus petit que les au moins deux premiers capteurs (S1, S3) et dont la zone de détection (ES2) ne chevauche que partiellement les premières zones de détection (ES1, ES3), le dispositif étant configuré de telle sorte qu'un objet est alors détecté lorsqu'il est détecté par au moins deux capteurs (S1, S2, S3) et est considéré comme pertinent lorsqu'il est détecté à la fois par les deux premiers capteurs (S1, S3) et par l'autre capteur (S2), l'angle de détection (EW) de l'au moins un autre capteur (S2) pouvant être modifié, **caractérisé en ce que** l'angle de détection (EW) est adapté aux conditions respectives de la route de manière à obtenir à chaque fois une adaptation optimale au type de route et à la largeur qui en dépend des voies de circulation (10.1, 10.2, 10.3).

3. Dispositif selon la revendication 2, **caractérisé en ce que** l'angle de détection (EW) des au moins deux premiers capteurs (S1, S3) est compris entre ±50° et ±60°, notamment égal à ±55°.

4. Dispositif selon l'une des revendications 2 et 3, **caractérisé en ce que** l'adaptation de l'angle de détection (EW) est effectuée par un signal de commande d'un système de navigation.

5. Dispositif selon l'une des revendications 2 à 4, **caractérisé en ce que** l'adaptation de l'angle de détection (EW) est effectuée par un signal de commande dérivé des signaux de sortie des capteurs (S1, S2, S3).
